# EUROPEAN PATENT APPLICATION

(11) **EP 3 396 617 A1**
(43) Date of publication of application: **31.10.2018**
(21) Application number: 17741372.1
(22) Date of filing: 17.01.2017
(51) Int. Cl.: G06Q 30/06, G06Q 50/10

(54) **DIGITAL CONTENT PROVISION SYSTEM**

(30) Priority: 18.01.2016 JP 2016007233
(71) Applicant: Sharp Kabushiki Kaisha, Sakai City, Osaka 590-8522 (JP)
(72) Inventor: GOTO, Naoko, Sakai City, Osaka 590-8522 (JP); SHIOMI, Makoto, Sakai City, Osaka 590-8522 (JP)
(74) Representative: Müller Hoffmann & Partner
(86) International application number: PCT/JP2017/001353
(87) International publication number: WO 2017/126494

(57) **Abstract**

A digital content provision system is provided that can encourage potential customers to acquire digital content items. The digital content provision system includes: a recommendation data storage unit 13 configured to store recommendation data for introducing or recommending the digital content items; a shelving image generating unit 11 configured to generate, based on the externally inputted recommendation data and externally inputted data related to the digital content items, a shelving image of a plurality of digital content items being arranged and displayed on a shelf and recommendation data being displayed for at least some of the digital content items; and a provision terminal (display unit) 30 configured to display the shelving image generated by the shelving image generating unit 11. The digital content items can be provided in a plurality of stores, and the recommendation data is generated by each of the stores.

## Description

### Technical Field

This application claims the benefit of priority to Japanese Patent Application, Tokugan, No. 2016-7233, filed on January 18, 2016, the entire contents of which are incorporated herein by reference.

The following disclosure relates to digital content provision systems.

### Background Art

Systems are known that provide electronic books and other digital content on Internet sites. Patent Literature 1 discloses an information provision device for generating and displaying an image of items arranged for sale on the basis of a set of rules of arrangement that is in accordance with attribute information of the items. This information provision device, if the items are electronic books as an example, can display an image of electronic books being arranged like paper books in a bookstore in accordance with, for example, the sale dates and levels of interest in the electronic books.

### Citation List

### Patent Literature

Patent Literature 1: Japanese Unexamined Patent Application Publication, Tokukai, No. 2002-216014

### Summary of Invention

### Technical Problem

In bookstores that provide paper books, sales clerks set up point-of-purchase advertising for books that they want to introduce or recommend to readers. The point-of-purchase advertising is a useful tool to encourage customers to acquire books. Meanwhile, the information provision device of Patent Literature 1 only displays an image of electronic books arranged on the basis of a prescribed set of rules of arrangement, which will not encourage customers to acquire books as much.

In view of this situation, the embodiments of the present invention disclosed below have an object to provide a digital content provision system that can encourage acquisition of digital content.

### Solution to Problem

An embodiment of the present invention is directed to a digital content provision system for providing digital content items in a store, the system including: a recommendation data storage unit configured to store recommendation data for introducing or recommending the digital content items; a shelving image generating unit configured to generate, based on the externally inputted recommendation data and externally inputted data related to the digital content items, a shelving image of a plurality of digital content items being arranged and displayed on a shelf and recommendation data being displayed for at least some of the digital content items; and a display unit configured to display the shelving image generated by the shelving image generating unit, wherein the digital content items can be provided in a plurality of stores, and the recommendation data is generated by each of the stores.

### Advantageous Effects of Invention

The disclosure of the present embodiment enables a user to search for digital content he/she wants to acquire while viewing a shelving image showing a plurality of digital content items being arranged and displayed on a shelf and recommendation data being displayed for at least some of the digital content items. The recommendation data is generated by each store. The user can read, for example, recommendations that are unique to the store and recognize, for example, the store's strong message of recommendation for the digital content items. The user is thus encouraged to acquire the digital content items.

### Brief Description of Drawings

FIG. 1 is a block diagram of a configuration of a digital content provision system in accordance with a first embodiment.
FIG. 2 shows an example of a shelving image.
FIG. 3 is a diagram representing a flow of processes of generating recommendation data by either scanning a handwritten point-of-purchase advertisement ("POP ad") with a scanner or using drawing software and then saving the generated recommendation data in a recommendation data server.
FIG. 4A shows an example of one of shelving images prepared in advance.
FIG. 4B shows an example of another one of shelving images prepared in advance.
FIG. 4C shows an example of a further one of shelving images prepared in advance.
FIG. 4D shows an example of still another one of shelving images prepared in advance.
FIG. 5 is a diagram depicting a method of selecting one of prepared shelving images for display on a display device of a provision terminal.
FIG. 6 is a diagram of an example of a remote controller for switching between shelving images.
FIG. 7 is an illustration of a spatial range where customers are allowed to browse through electronic books.
FIG. 8 is a drawing representing one of electronic books in a shelving image displayed on a display device of a provision terminal.
FIG. 9 is a block diagram of a configuration of a digital content provision system in accordance with a fourth embodiment.
FIG. 10 is a diagram of a configuration of a shelving terminal in accordance with a fifth embodiment.
FIG. 11 shows a shelving image displayed before a customer starts to browse through an electronic book and a shelving image displayed while the customer is browsing through the electronic book.
FIG. 12 is a block diagram of a configuration of a digital content provision system 100 in accordance with a seventh embodiment.
FIG. 13A shows an example of a shelving image displayed on a provision terminal in a store.
FIG. 13B shows an example of a shelving image displayed on a provision terminal in another store.
FIG. 13C shows an example of a shelving image displayed on a provision terminal in a further store.
FIG. 14 shows another example of a shelving image generated on the basis of a set of rules of shelving that is unique to a store.

### Description of Embodiments

The present invention, in an embodiment, is directed to a digital content provision system for providing digital content items in a store, the system including: a recommendation data storage unit configured to store recommendation data for introducing or recommending the digital content items; a shelving image generating unit configured to generate, based on the externally inputted recommendation data and externally inputted data related to the digital content items, a shelving image of a plurality of digital content items being arranged and displayed on a shelf and recommendation data being displayed for at least some of the digital content items; and a display unit configured to display the shelving image generated by the shelving image generating unit, wherein the digital content items can be provided in a plurality of stores, and the recommendation data is generated by each of the stores (first arrangement).

According to the first arrangement, the user would, upon reading, for example, recommendations reproduced from recommendation data prepared by each store, recognize, for example, the store's strong message of recommendation for the digital content items. The user is thus encouraged to acquire the digital content items. The shelving image shows a plurality of digital content items being arranged and displayed on a shelf and recommendation data being displayed for at least some of the digital content items. Therefore, the user can select digital content as if he/she was selecting books in a real bookstore or CDs in a real CD store. The user is hence encouraged to acquire the digital content items.

The digital content provision system of the first arrangement may be configured so as to further include a shelving information input unit configured to enable an input of shelving information for the digital content items, wherein the shelving image generating unit generates the shelving image based on the shelving information (second arrangement).

According to the second arrangement, each store that provides electronic books can determine a set of rules of shelving that is unique to the store and shelve electronic books in a unique manner. That enables different stores to shelve electronic books in different manners and hence attract customers to the stores.

The digital content provision system of the first arrangement may be configured such that the shelving image generating unit generates the shelving image based on externally inputted shelving information (third arrangement).

According to the third arrangement, shelving images can be generated without the stores having to prepare shelving information.

The digital content provision system of any one of the first to third arrangements may be configured so as to further include a local shelving data storage unit configured to store local shelving data generated by the stores, wherein the shelving image generating unit generates the shelving image based on the local shelving data (fourth arrangement).

According to the fourth arrangement, the store's sales clerk can shelve and recommend poorly known digital content that has no shelving data prepared. That can in turn help the store create its originality and attract more customers to the store.

The digital content provision system of any one of the first to fourth arrangements may be configured such that: the digital content items include an electronic book; the shelving image generating unit generates a shelving image of a plurality of electronic books being arranged on a shelf such that spine covers or front covers of the electronic books are visible; and each of the stores determines how the electronic books should be arranged (fifth arrangement).

According to the fifth arrangement, each store can determine how a plurality of electronic books should be arranged on a shelf in such a manner that the front or spine cover of the electronic books are visible. The user can readily recognize, for example, that the electronic books displayed so as to show their front covers are recommended by the store and be encouraged to acquire the electronic books.

The digital content provision system of any one of the first to fifth arrangements may be configured such that: the shelving image generating unit generates a plurality of shelving images; and the display unit is capable of displaying the shelving images in a switchable manner (sixth arrangement).

According to the sixth arrangement, the user can check a large number of digital content items. That can in turn broaden the range of digital content the user may potentially acquire and further encourage acquisition of digital content.

The digital content provision system of any one of the first to sixth arrangements may be configured so as to further include: a location determining unit configured to determine whether or not a user is in a prescribed area; and a preview control unit configured to allow the user to preview the digital content items if the user is determined to be in the prescribed area (seventh arrangement).

According to the seventh arrangement, the user can preview digital content. The user is assured of the contents of digital content before acquisition and thus encouraged to acquire the digital content. In addition, since the user is allowed to preview digital content only if the user is in a prescribed area, the user can, when back at home as an example, be prevented from previewing the digital content he/she has not acquired yet. This is useful especially when the digital content is provided for a fee.

The digital content provision system of any one of the first to seventh arrangements may be configured so as to further include a user information acquisition unit configured to acquire user information, wherein the shelving image generating unit acquires data related to the digital content items from the digital content storage unit in accordance with the user information acquired by the user information acquisition unit, in order to generate the shelving image (eighth arrangement).

According to the eighth arrangement, it is possible to introduce, to users, digital content that matches user information. That can further encourage acquisition of digital content.

### Embodiments

The following will describe embodiments of the present invention in detail in reference to drawings. Identical or equivalent members will be denoted by the same reference signs in the drawings, and description thereof is not repeated. For clarity purposes, the drawings to which reference will be made in the following description may show structures in a simplified or schematic form or omit some structural members. The relative dimensions of structural members as they are shown in the drawings may not represent the actual relative dimensions thereof.

### First Embodiment

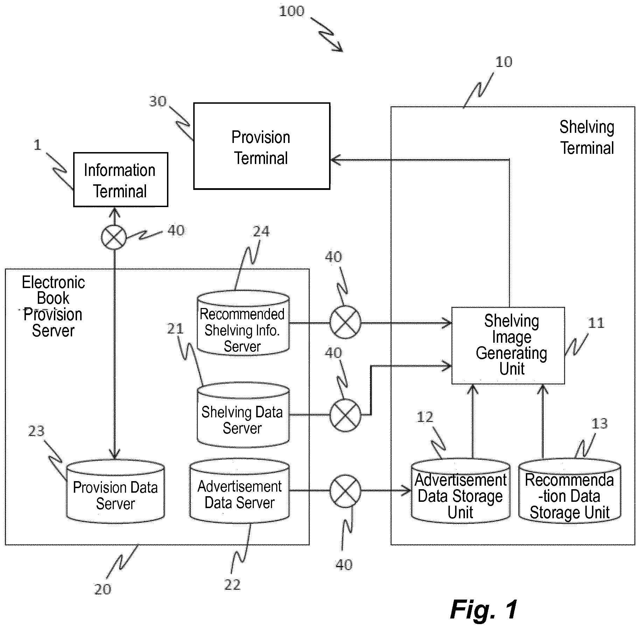

FIG. 1 is a block diagram of a configuration of a digital content provision system 100 in accordance with a first embodiment. The present embodiment takes electronic books as an example of digital content to be provided.

The digital content provision system 100 includes a shelving terminal 10, an electronic book provision server 20, and a provision terminal (display unit) 30.

The electronic book provision server 20 is, for example, a publishing company's property and includes a shelving data server (digital content storage unit) 21, an advertisement data server 22, a provision data server 23, and a recommended shelving information server 24.

The shelving data server 21 contains various data related to a plurality of electronic books. The various data related to electronic books include, for example, image data for front and spine covers of the electronic books and data on the sizes of paper editions of the books, which will be collectively referred to as "shelving data" in this application. Electronic books have the same front and spine cover images as their paper editions. Alternatively, electronic books may have different front and spine cover images from those of their paper editions. The various data related to electronic books contained in the shelving data server 21 is transmitted to the shelving terminal 10 over the Internet 40.

The advertisement data server 22 contains plural sets of advertisement data for electronic books. Advertisement data for an electronic book is, for example, image data of a belly band (a strip of paper on which sales pitches and recommendations are printed) for a paper edition of the book. The advertisement data for electronic books contained in the advertisement data server 22 is transmitted to the shelving terminal 10 over the Internet 40.

The provision data server 23 contains plural sets of data for electronic books to be provided. Users can read a desired electronic book by downloading data for the electronic book to an information terminal 1 over the Internet 40. The information terminal 1 is, for example, a smartphone. The information terminal 1 is, however, by no means limited to a smartphone and may be any terminal on which the user can read electronic books, such as an ebook reader, a tablet computer, or a laptop computer. The information terminal 1 may be either owned by the user or prepared by the store.

The recommended shelving information server 24 contains recommended shelving information that includes a set of rules that dictates how electronic books should be shelved.

The shelving terminal 10 is installed in a store that provides electronic books. This store is a "real" store as opposed to a "virtual" store on the Internet and, in this description, provides both electronic books and paper books. Throughout the following description in the present specification, a "bookstore" refers to a bookstore that provides paper books. Stores that provide electronic books may provide only electronic books and no paper books. Electronic books may be provided for a fee or free of charge. The shelving terminal 10 includes a shelving image generating unit 11, an advertisement data storage unit 12, and a recommendation data storage unit 13.

The advertisement data storage unit 12 contains the advertisement data transmitted over the Internet 40 from the advertisement data server 22 in the electronic book provision server 20.

The recommendation data storage unit 13 contains recommendation data for electronic books. Recommendation data for an electronic book includes, for example, text and images for recommending electronic books to users. This recommendation data is an electronic version of point-of-purchase advertisements ("POP ads") created by sales clerks of a bookstore where electronic books are provided in order to introduce and recommend books. The recommendation data is generated by the sales clerks. An electronic book may be provided in a plurality of stores. Recommendation data for an electronic book is generated by each store.

The shelving image generating unit 11 generates a shelving image on the basis of the recommended shelving information contained in the recommended shelving information server 24, the various data transmitted from the shelving data server 21 in the electronic book provision server 20 in relation to electronic books, the advertisement data contained in the advertisement data storage unit 12 for electronic books, and the recommendation data contained in the recommendation data storage unit 13 for electronic books. In other words, the shelving image generating unit 11 generates a shelving image of: a plurality of electronic books shelved on the basis of the recommended shelving information; and the advertisement data and recommendation data for the electronic books. In the present embodiment, the shelving image shows a plurality of books as if they were being displayed on book shelves.

The provision terminal 30 is for providing electronic books and built around a display device. This display device is equipped with a touch panel. The shelving image generated by the shelving image generating unit 11 is displayed on the display device of the provision terminal 30. Users can obtain desired electronic books while viewing the shelving image displayed on the display device of the provision terminal 30. The provision terminal 30 and the shelving terminal 10 may be integrated into a single device.

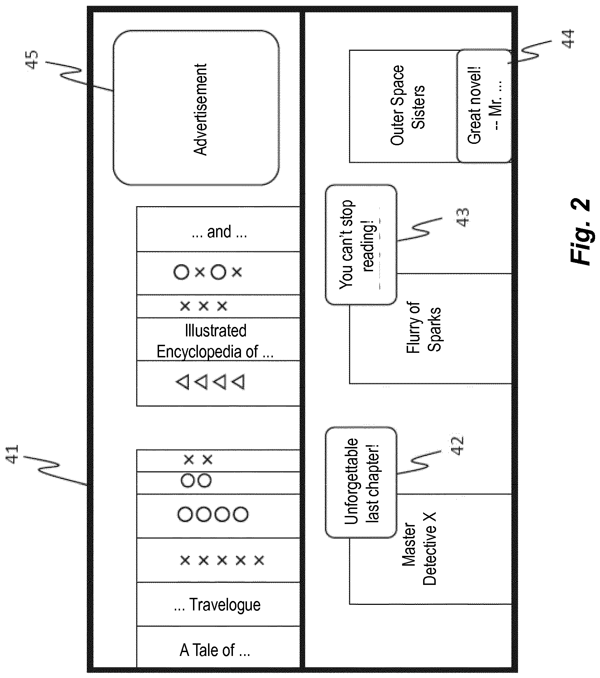

FIG. 2 shows a shelving image 41 containing a plurality of electronic books being arranged on two book shelves, one upper and one lower. A plurality of electronic books is arranged on the upper shelf such that their spine covers are visible. The upper shelf also shows advertisement information 45. The advertisement information 45 is, for example, an advertisement related to one of the electronic books. As an example, if a movie is scheduled to be released soon that is based on the original book, "A Tale of ...," shown on the upper shelf, advertisement information for the movie is displayed.

A plurality of electronic books is arranged on the lower shelf of the shelving image 41 shown in FIG. 2 such that their front covers are visible. The lower shelf shows, along with the electronic books, sets of recommendation data 42 and 43 and advertisement data 44 for the electronic books. The sets of recommendation data 42 and 43 for the electronic books may be displayed at any position. As an example, the sets of recommendation data 42 and 43 may be displayed partially overlapping an electronic book as shown in FIG. 2 or not overlapping an electronic book. Recommendation data is not necessarily displayed for all electronic books in the shelving image and may be displayed for at least some of the electronic books.

The shelving image 41 shown in FIG. 2 shows a plurality of electronic books being arranged on two book shelves. Alternatively, the shelving image 41 may show a plurality of electronic books being arranged on a single book shelf or three or more book shelves. The shelving image 41 preferably shows electronic books with the same dimensions as paper editions of the books. The shelving image 41, however, does not necessarily show electronic books with the same dimensions as paper editions of the books. For example, the electronic books may be displayed with scaled-down or scaled-up dimensions according to a prescribed scale ratio, in which case the shelving image generating unit 11 adjusts the size of the displayed images of the electronic books to match to the dimensions of the display device of the provision terminal 30.

As mentioned earlier, the sets of recommendation data 42 and 43 may be prepared uniquely by a sales clerk of an individual store. Therefore, recommendation data for the same electronic book differs from store to store. In contrast, the advertisement data 44 is prepared, for example, by the publishing company and is provided by the advertisement data server 22. Therefore, the same advertisement data is displayed for the same electronic book on provision terminals 30 installed in different stores. As an alternative, the advertisement data server 22 may contain plural sets of advertisement data for an electronic book, so that the store can select any one of the sets of advertisement data for display in the shelving image 41.

The recommendation data for electronic books may be prepared as image data, for example, by a store's sales clerk writing by hand a POP ad like the one found in a bookstore and scanning the handwritten POP ad with a scanner or imaging the handwritten POP ad with a camera. The use of image data generated based on a handwritten POP ad as the recommendation data for inclusion in the shelving image 41 would convey, for example, the sales clerk's strong message of recommendation for the book to users, thereby encouraging the users to acquire the book. Alternatively, the sales clerk may generate recommendation data using drawing software (graphics software) and save the generated recommendation data in the recommendation data storage unit 13.

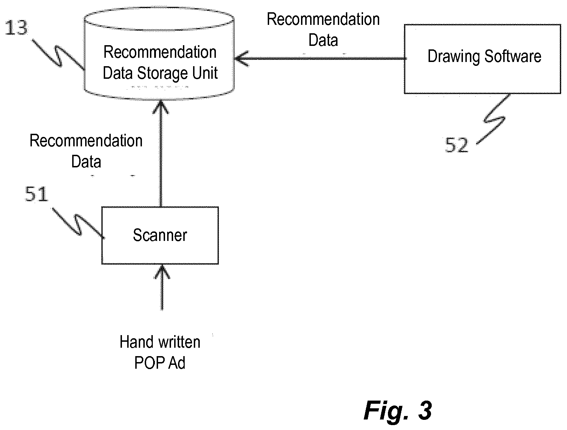

FIG. 3 represents a flow of processes of generating recommendation data (image data) by either scanning a handwritten POP ad with a scanner 51 or using drawing software 52 and then saving the generated recommendation data in the recommendation data storage unit 13.

The user, while viewing a shelving image displayed on the provision terminal 30, for example, touches the image of a desired electronic book to download data for that electronic book to the information terminal 1. As an example, the provision terminal 30 displays a processing screen for prompting the user to download data for the touch-selected electronic book, so that once prescribed procedures are completed, the data for the electronic book contained in the provision data server 23 is downloaded to the information terminal 1. Alternatively, the information terminal 1 may display the processing screen for prompting the user to download data for the touch-selected electronic book.

Conventionally, the user of a system that provides electronic books over the Internet conducts text- or category-based searches to find and acquire a desired electronic book. In this method, the user can only find electronic books he/she wants to acquire within the breadth and depth of his/her queries or the categories.

In contrast, the digital content provision system 100 in accordance with the present embodiment enables the user to search for a desired electronic book by looking at the shelving image 41 displayed on the provision terminal 30 as if he/she was looking for a book in a bookstore. This feature is enhanced by the display of the shelving image 41 that includes, along with images of electronic books, recommendation data prepared uniquely by a sales clerk of an individual store. The user can find electronic books that he/she want to read by relying on the recommendation data (recommendations for the electronic books). Hence, the digital content provision system 100 can better encourage the user to acquire electronic books than the conventional system and additionally broaden the range of electronic books the user may potentially acquire. The user may also find interesting the recommendation data that is unique to the store and could become a frequent visitor to the store. To put it differently, the digital content provision system 100 can attract more customers to the store.

### Second Embodiment

The provision terminal 30 displays a single shelving image in the first embodiment. In a second embodiment, a plurality of shelving images are prepared, so that the provision terminal 30 switches its display between the shelving images either automatically or in response to a user operation.

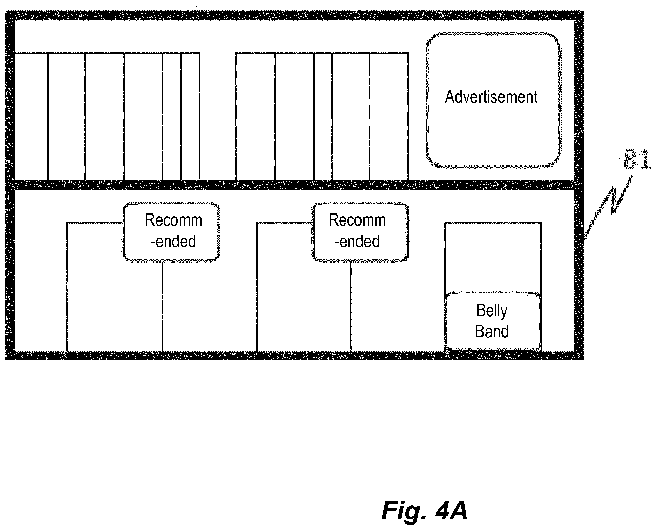

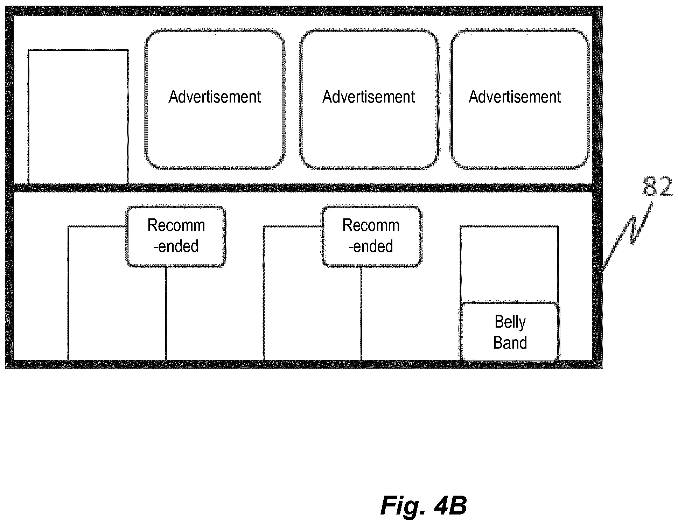

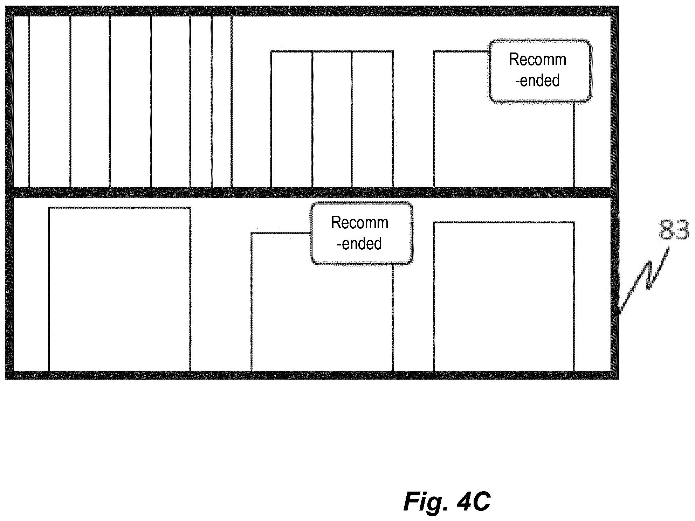

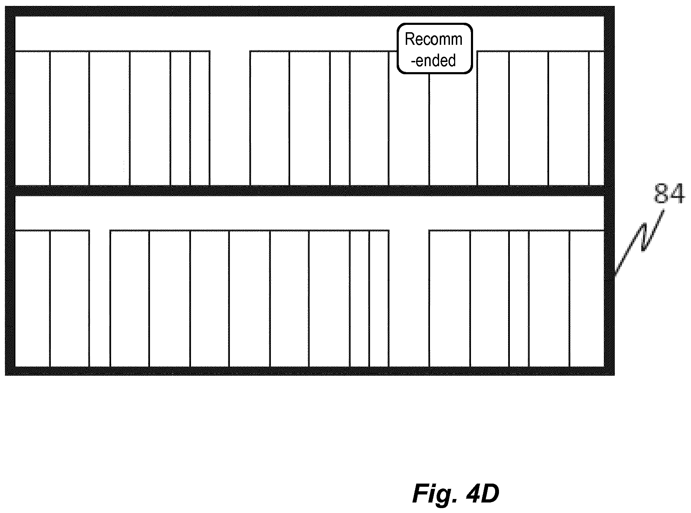

FIGs. 4A to 4D illustrate examples of shelving images 81 to 84 prepared in advance. In the shelving images 81 to 84, "Advertisement" indicates advertisement information, "Recommended" indicates recommendation data, and "Belly Band" indicates advertisement data that is an equivalent of a belly band around a paper book.

The shelving image generating unit 11 generates the shelving images 81 to 84 as shown in FIGs. 4A to 4D. As mentioned earlier, the contents of recommendation data for electronic books can be determined by individual stores. More or less than four shelving images may be prepared in advance.

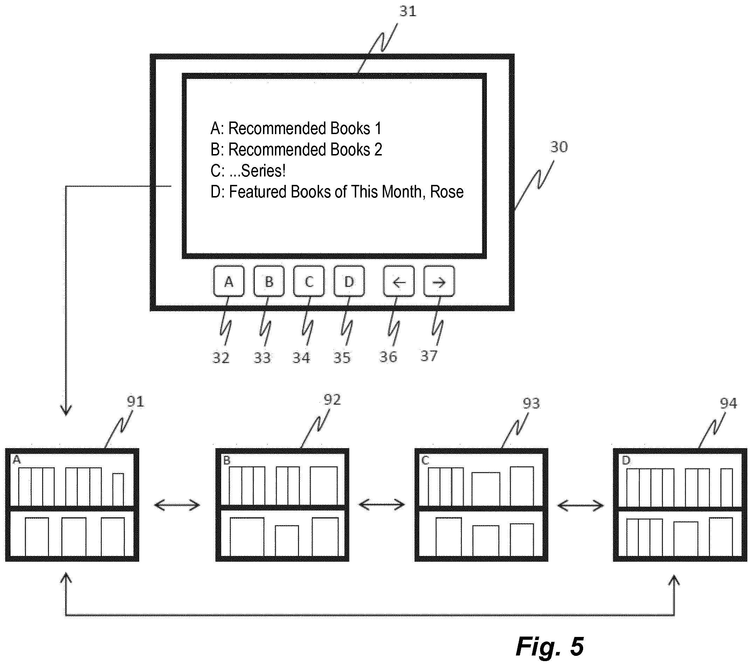

FIG. 5 is a diagram depicting a method of selecting one of prepared shelving images for display on a display device 31 of the provision terminal 30. As shown in FIG. 5, the provision terminal 30 includes the display device 31 and operation buttons 32 to 37.

In the example illustrated in FIG. 5, four shelving images 91 to 94 are prepared in advance. The display device 31 of the provision terminal 30 first displays a screen that gives descriptions of the shelving images available for selection. In the display example shown in FIG. 5, "A: Recommended Books 1," "B: Recommended Books 2," "C: ... Series!," and "D: Featured Books of This Month, Rose" describe the contents of the shelving images and are associated respectively with the shelving images 91 to 94 available for selection.

The user operates the operation buttons 32 to 37 to select the shelving image he/she wants to be displayed. The operation buttons 32 to 35 are associated respectively with "A: Recommended Books 1," "B: Recommended Books 2," "C: ... Series!," and "D: Featured Books of This Month, Rose." For example, if the button 32 is pressed, the display device 31 displays the shelving image 91, which is associated with "A: Recommended Books 1."

The operation buttons 36 and 37 are for switching between shelving images. As an example, if the operation button 37 is pressed when the shelving image 91 is being displayed on the display device 31, the display device 31 switches its displayed shelving images from the shelving image 91 to the shelving image 92. As another example, if the operation button 37 is pressed when the shelving image 94 is being displayed on the display device 31, the display device 31 switches its displayed shelving images from the shelving image 94 to the shelving image 91.

The operation button 36 works for switching between shelving images in the opposite direction from the operation button 37. As an example, if the operation button 36 is pressed when the shelving image 93 is being displayed on the display device 31, the display device 31 switches its displayed shelving images from the shelving image 93 to the shelving image 92.

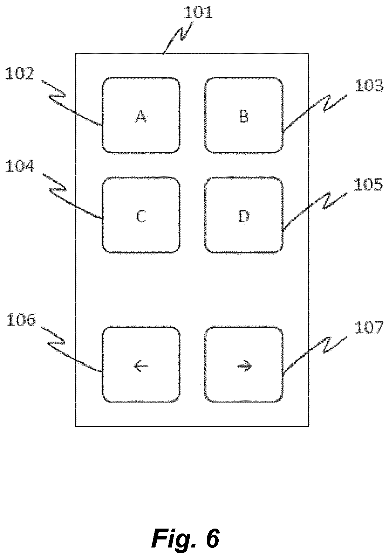

The shelving images being displayed on the display device 31 of the provision terminal 30 may be switched using a remote controller. FIG. 6 is a diagram of an example of a remote controller 101 for switching between shelving images. The remote controller 101 has operation buttons 102 to 107 that correspond respectively to the operation buttons 32 to 37 of the provision terminal 30 shown in FIG. 5.

The shelving images being displayed on the display device 31 of the provision terminal 30 may be switched using the information terminal 1 such as a smartphone. For example, an image that resembles the remote controller 101 in FIG. 6 is displayed upon the user accessing a prescribed site on the Internet using the information terminal 1, so that the information terminal 1 can function as the remote controller 101. When this is actually the case, the information terminal 1 performs wireless communications with the provision terminal 30 via, for example, Bluetooth® or infrared light.

As mentioned earlier, the shelving images being displayed on the display device 31 of the provision terminal 30 may be switched automatically. For example, the display is switched between a plurality of shelving images at prescribed time intervals.

According to the present embodiment, the display device 31 of the provision terminal 30 can display a plurality of shelving images in a switchable manner. The user can therefore check a large number of electronic books. That can in turn further broaden the range of electronic books the user may potentially acquire. Hence, the present embodiment can further encourage the user to acquire electronic books.

### Third Embodiment

Users can browse through books in bookstores. The digital content provision system in accordance with a third embodiment enables users to browse through electronic books.

A user browses through an electronic book on the information terminal 1. More specifically, the user can browse through some or all electronic books he/she finds interesting, by accessing the provision data server 23 in the electronic book provision server 20 from the information terminal 1 over the Internet 40. The third embodiment however imposes a pre-designated spatial range ("prescribed area") where the user is allowed to browse through electronic books. In other words, an access to the provision data server 23 containing electronic books is permitted only if the user is determined to be in the prescribed area.

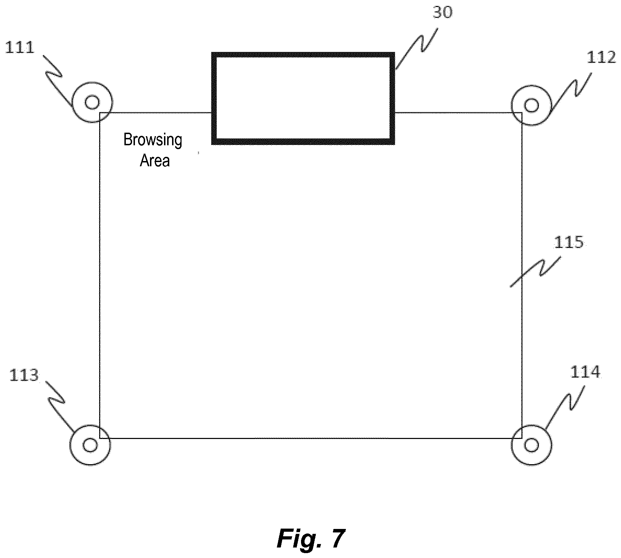

FIG. 7 is an illustration of an example of a spatial range where users are allowed to browse through electronic books. FIG. 7 represents how the space containing the provision terminal 30 looks like when viewed from above. A spatial range 115 where users are allowed to browse through electronic books is designated close to the provision terminal 30 and delimited by four space delimiters 111 to 114. If the information terminal 1 is located within the spatial range 115 surrounded by the space delimiters 111 to 114, the user can browse through electronic books on the information terminal 1. On the other hand, if the information terminal 1 is located outside the spatial range 115, the user cannot browse through electronic books on the information terminal 1.

Whether the information terminal 1 is located within the spatial range 115 may be determined, for example, through wireless communications between the information terminal 1 and the four space delimiters 111 to 114. The provision data server 23 permits the information terminal 1 an access to browse through electronic books over the Internet 40, for example, only if the information terminal 1 is determined to be located within the spatial range 115. When this is actually the case, the provision data server 23 may obtain information as to whether or not the information terminal 1 is located within the spatial range 115 from either the space delimiters 111 to 114 or the information terminal 1.

The spatial range where the user is allowed to browse through electronic books may be determined by other methods. For example, A WiFi® or other wireless communications device may be installed in order to designate the range in which the information terminal 1 can perform wireless communications with this wireless communications device as the spatial range where the user is allowed to browse through electronic books.

Alternatively or additionally, the third embodiment may impose temporal restrictions on browsing of electronic books. For example, the user is allowed to browse for a prescribed, limited length of time (e.g., 10 minutes) and not allowed to browse after the prescribed length of time elapses. In these cases, further restrictions need to be imposed, for example, such that browsing is allowed only once for each information terminal 1.

The user can choose an electronic book for browsing, for example, by any one of methods (a) to (c) below.
(a) The user touches a desired electronic book in the shelving image being displayed on the display device of the provision terminal 30.
(b) The user scans the QR code® associated with an electronic book in the shelving image being displayed on the display device of the provision terminal 30, by using a camera of the information terminal 1.
(c) The user scans the title of a desired electronic book in the shelving image being displayed on the display device of the provision terminal 30, by using a camera of the information terminal 1.

Method (a) will be described in detail. The user establishes beforehand a wireless communications (e.g., WiFi®) link between the provision terminal 30 and the information terminal 1. In response to the user touching one of electronic books in the shelving image, the information terminal 1 accesses the provision data server 23 in the electronic book provision server 20 over the Internet 40 and displays the contents of the touch-selected electronic book on the display device. In this state, the data of the electronic book per se is not downloaded to the information terminal 1. Therefore, the user cannot read the electronic book on the information terminal 1, for example, when he is back at home.

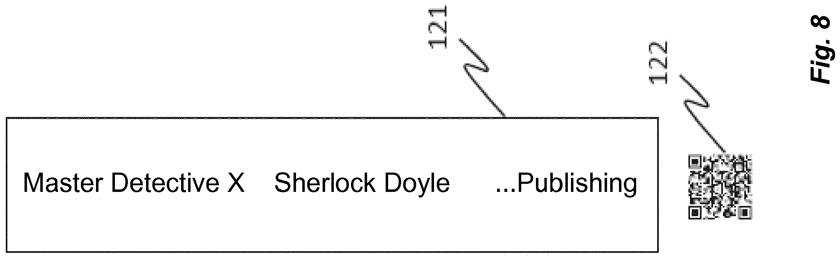

Method (b) will be described in detail. FIG. 8 is a drawing representing one of electronic books in a shelving image displayed on the display device of the provision terminal 30. FIG. 8 shows a spine cover 121 of an electronic book titled Master Detective X with a QR code® 122 below the electronic book. In response to the user scanning the QR code 122 with a camera of the information terminal 1, the information terminal 1 accesses the provision data server 23 in the electronic book provision server 20 over the Internet 40 and displays the contents of the electronic book on the display device of the information terminal 1.

Method (c) will be described in detail. The user images the title of a desired one of electronic books in the shelving image with a camera of the information terminal 1. The imaged title is recognized as characters, or OCRed, by a character recognition function of the information terminal 1. The information terminal 1 then accesses the provision data server 23 in the electronic book provision server 20 over the Internet 40 and displays the contents of the electronic book having the OCRed title on the display device of the information terminal 1.

Methods (a) to (c) do not require the user to search for the electronic book he/she wants to browse through by text-based queries, which allows the user a quick and easy access to browsable data. The third embodiment is configured such that if the user likes the electronic book he/she has browsed through, the user can acquire the electronic book by carrying out prescribed procedures on the information terminal 1.

Along with the contents of an electronic book, the display device of the information terminal 1 may also display information on that electronic book. "Information on an electronic book" refers, for example, to advertisements for the electronic book, related electronic books, or a movie or DVD version of the book. Alternatively or additionally, if a book that can be browsed through in electronic format is also available in paper form in the store, the information terminal 1 may display where the paper version is shelved.

### Fourth Embodiment

In the first to third embodiments described above, the image data of front and spine covers of an electronic book, which is used to generate a shelving image, is generated by the electronic book provision server 20 and stored in the shelving data server 21. If the shelving data server 21 contains no front and spine cover images of an electronic book, the cover images of the electronic book cannot be shown in the shelving image.

In contrast, a fourth embodiment enables the store to prepare image data for the front and spine covers of an electronic book.

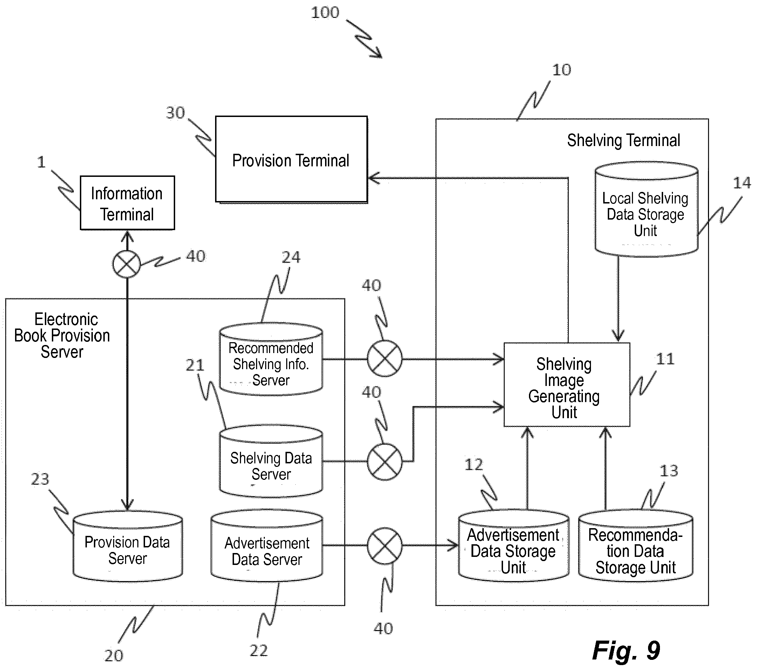

FIG. 9 is a block diagram of a configuration of the digital content provision system 100 in accordance with the fourth embodiment. The shelving terminal 10 includes a local shelving data storage unit 14 as well as the shelving image generating unit 11, the advertisement data storage unit 12, and the recommendation data storage unit 13.

A sales clerk of the store prepares image data, for front and spine covers of an electronic book, that is missing from the shelving data server 21 and other like various data that is needed to generate a shelving image for the electronic book and stores all this various data in the local shelving data storage unit 14. For example, if an electronic book is not well known, the shelving data server 21 in the electronic book provision server 20 may contain no image data of its front and spine covers. If a sales clerk wants to recommend such a poorly known book, he/she can still prepare various data for the electronic book and stores it in the local shelving data storage unit 14. This various data that is needed to prepare a unique shelving image for an electronic book by individual stores in this manner is termed the "local shelving data."

The shelving image generating unit 11 generates a shelving image on the basis of the recommended shelving information contained in the recommended shelving information server 24, the various data contained in the shelving data server 21 in the electronic book provision server 20 for the electronic book, the various data contained in the local shelving data storage unit 14 for the electronic book, the advertisement data contained in the advertisement data storage unit 12 for the electronic book, and the recommendation data contained in the recommendation data storage unit 13 for the electronic book.

The present embodiment enables the store to readily introduce and provide, in a shelving image, electronic books that are not well known and those which do not sell well. These features facilitate provision of electronic versions of, for example, antiquarian and other extremely rare books and valuable books that cannot be physically displayed due to the need for storage under strict conditions. Some small bookstores in town have unique stocks of books and are popular for that reason. The present embodiment may be used similarly in such bookstores, where the bookstores can include electronic versions of their unique stocks of books in a shelving image.

### Fifth Embodiment

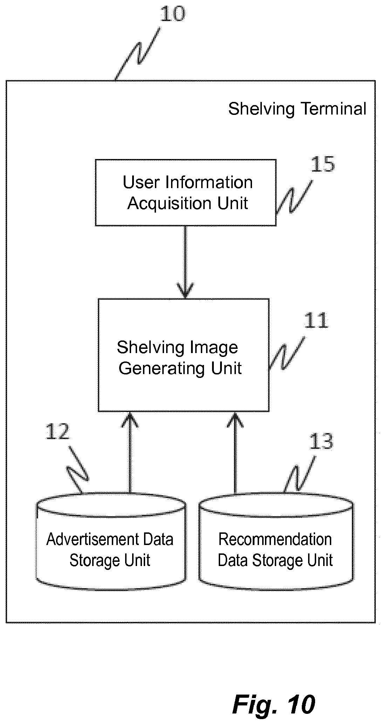

FIG. 10 is a diagram of a configuration of the shelving terminal 10 in accordance with a fifth embodiment. The shelving terminal 10 in accordance with the present embodiment includes a user information acquisition unit 15 as well as the shelving image generating unit 11, the advertisement data storage unit 12, and the recommendation data storage unit 13.

The user information acquisition unit 15 acquires user information. User information is, for example, the gender, age, book preferences, and book acquisition history of the user. The user information acquisition unit 15 includes, for example, a camera and a face recognition device (face recognition software). In the current case, the camera images the face of the user, and the face recognition device recognizes the gender and age range of the user. The age range may be determined either elaborately or as roughly as distinguishing between children and adults. When this is actually the case, the camera is installed close to the provision terminal 30.

The shelving image generating unit 11 extracts electronic books recommended for the user on the basis of the user information acquired by the user information acquisition unit 15 and generates a shelving image containing images of the extracted electronic books. For example, if the user is determined to be a female in her twenties, the shelving image generating unit 11 extracts electronic books targeted at females in their twenties. If the user is determined to be an adult male, the shelving image generating unit 11 extracts electronic books targeted at adult males. Data for the electronic books recommended on the basis of user information may be prepared by individual stores. These features enable introduction of electronic books suitable to each user on the basis of his/her user information.

The user information acquisition unit 15 may have a configuration other than the combination of a camera and a face recognition device. For example, the user information acquisition unit 15 may be a card reader. Specifically, the user is given a member card containing preregistered user information, and the user information is acquired when the member card is scanned by the card reader.

Alternatively, the provision terminal 30 may display a user information input screen through which the user enters his/her gender, age range, book preferences, and other information.

The shelving image generating unit 11 in the present embodiment extracts electronic books recommended for the user on the basis of the user information acquired by the user information acquisition unit 15 for generation of a shelving image. Therefore, the electronic book provision server 20 may not include the recommended shelving information server 24.

### Sixth Embodiment

In the third embodiment, the user can browse through electronic books on the information terminal 1. In a sixth embodiment, the user can browse through electronic books on the provision terminal 30.

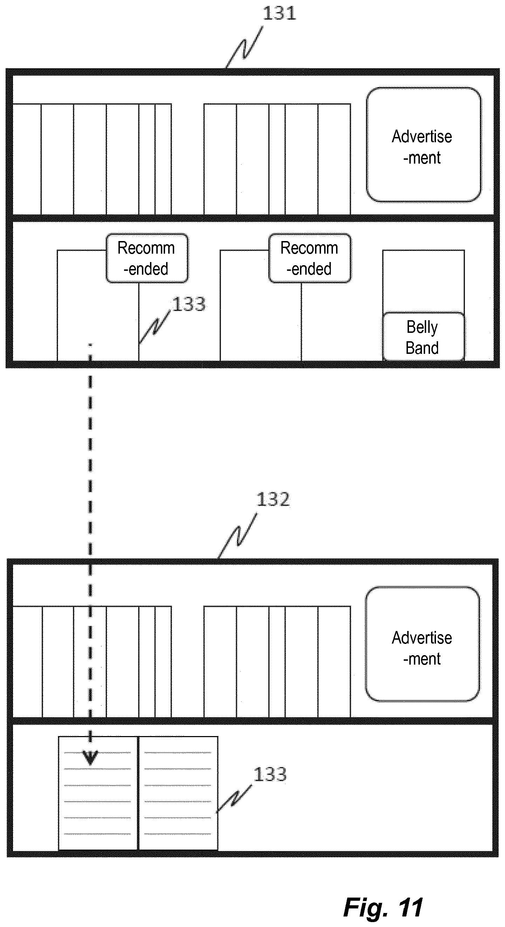

FIG. 11 shows a shelving image 131 displayed before a user starts to browse through an electronic book and a shelving image 132 displayed while the user is browsing through an electronic book. In the shelving images 131 and 132, "Advertisement" indicates advertisement information, "Recommended" indicates recommendation data, and "Belly Band" indicates advertisement data that is an equivalent of a belly band around a paper book.

The shelving image 131, displayed before a user starts to browse through an electronic book, shows an electronic book 133 positioned in such a manner that its front cover is visible. If the user touches the electronic book 133 in this shelving image 131, the electronic book 133 is shown opened as in the shelving image 132. In such a case, for example, the electronic books displayed on the same shelf as the electronic book that the user browses through may not be displayed during the browsing.

For example, if electronic books in the shelving image are being displayed with the same, real-life dimensions as the paper edition of the book, the user can browse through a real-sized electronic book. In this case, the user can again browse through electronic books only where the provision terminal 30 is installed. In other words, the user is allowed to browse through electronic books only in a prescribed area in which the user can touch the provision terminal 30. If the user carries out prescribed procedures on the provision terminal 30 to browse through an electronic book, the user is determined to be within the prescribed area.

### Seventh Embodiment

In the first embodiment described above as an example, the recommended shelving information server 24 in the electronic book provision server 20 contains recommended shelving information, and the shelving image generating unit 11 in the shelving terminal 10 generates a shelving image on the basis of the recommended shelving information contained in the recommended shelving information server 24. Therefore, the electronic books are shelved in the same manner in all stores based on this recommended shelving information. A seventh embodiment enables each electronic book store to devise its own rules of shelving, to enable different shelving for each store.

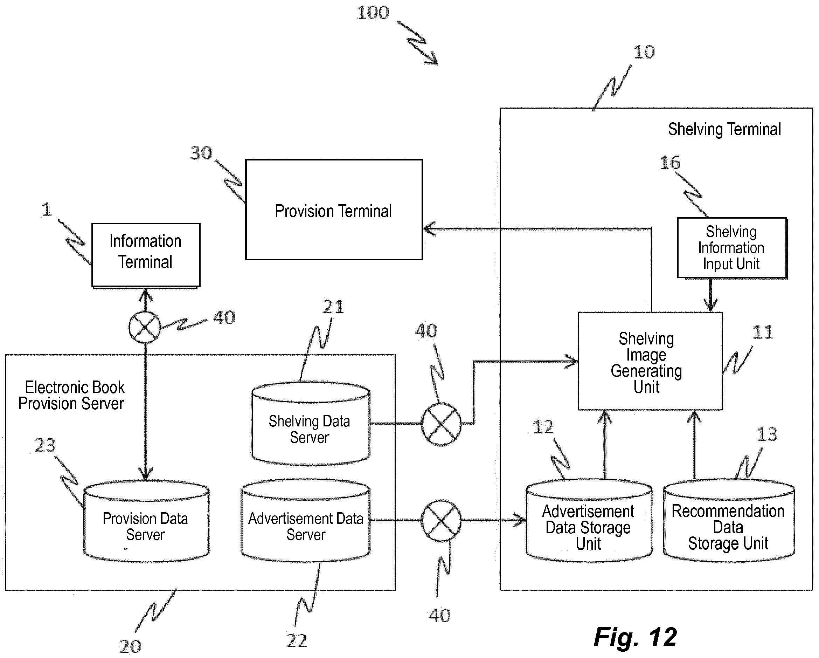

FIG. 12 is a block diagram of a configuration of the digital content provision system 100 in accordance with the seventh embodiment. In the digital content provision system 100 in accordance with the seventh embodiment, the electronic book provision server 20 does not include the recommended shelving information server 24, and the shelving terminal 10 instead includes a shelving information input unit 16.

The shelving information input unit 16 is for enabling a sales clerk in a store that provides electronic books to input shelving information for the electronic books. The shelving information input unit 16 is, for example, a keyboard and mouse for a personal computer. Shelving information is a set of rules of shelving that dictates how electronic books will be selected, arranged, and displayed. A sales clerk in a store that provides electronic books selects electronic books and determines how the electronic books will be arranged and displayed and enters shelving information on the shelving information input unit 16.

The shelving image generating unit 11 generates a shelving image on the basis of the shelving information inputted on the shelving information input unit 16, the various data that is transmitted from the shelving data server 21 in the electronic book provision server 20 in relation to electronic books, the advertisement data contained in the advertisement data storage unit 12 for electronic books, and the recommendation data contained in the recommendation data storage unit 13 for electronic books.

In bookstores that provide paper books, the books that bookstore clerks want to introduce or recommend to customers are placed where the books are easily spotted by customers. Recommended books are a reflection of each bookstore's originality and could attract customers. The information provision device of Patent Literature 1 only displays images of electronic books arranged on the basis of a prescribed set of rules of arrangement, falling short of enabling unique shelving for each store. The digital content provision system in accordance with the present embodiment, however, enables unique shelving for each store that provides electronic books, which could attract customers to the store.

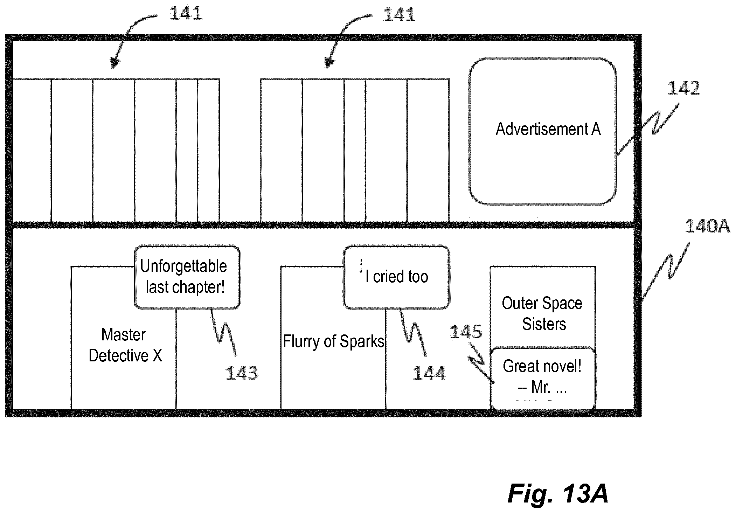

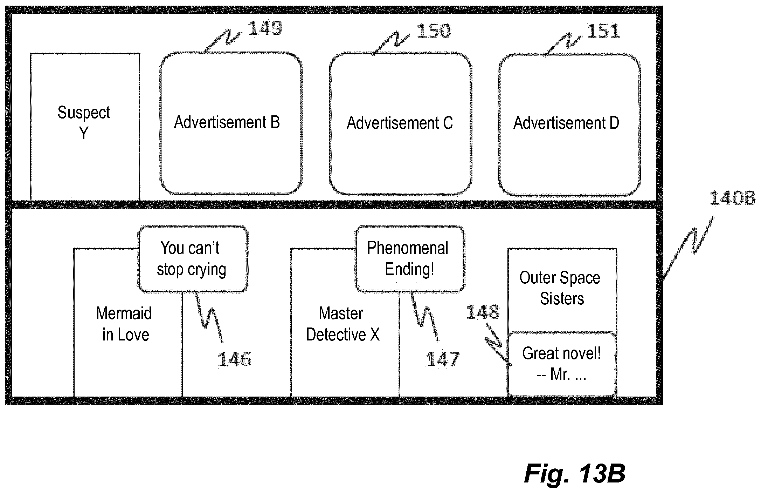

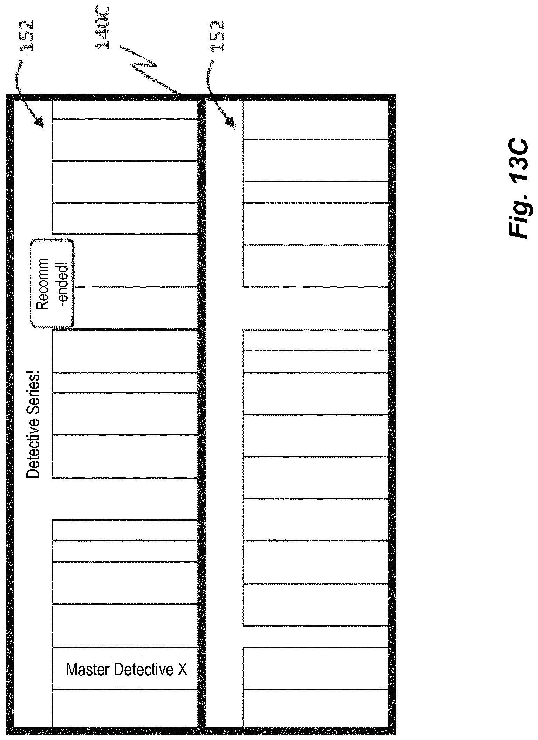

FIGs. 13A to 13C illustrate different shelving images displayed on the provision terminal 30 in different stores. FIG. 13A shows a shelving image 140A displayed on the provision terminal 30 in store A. FIG. 13B shows a shelving image 140B displayed on the provision terminal 30 in store B. FIG. 13C shows a shelving image 140C displayed on the provision terminal 30 in store C. The shelving images 140A to 140C in FIGs. 13A to 13C each show a plurality of electronic books being arranged on two book shelves, one upper and one lower.

The shelving image 140A in FIG. 13A includes, on the upper shelf, advertisement information 142, "Advertisement A," and an image 141 of a plurality of electronic books being arranged such that their spine covers are visible. The shelving image 140A shows, on the lower shelf, a plurality of electronic books being arranged such that their front covers are visible and includes recommendation data 143 and 144 and advertisement data 145 for the electronic books in addition to the electronic books.

The shelving image 140B in FIG. 13B shows a plurality of electronic books being arranged on both the upper and lower shelves such that their front covers are visible. The upper shelf also shows advertisement information 149 to 151, "Advertisement B," "Advertisement C," and "Advertisement D."

The shelving image 140C in FIG. 13C includes, on both the upper and lower shelves, an image 152 of a plurality of electronic books being arranged such that their spine covers are visible. FIG. 13C shows "Detective Series" featuring electronic books related to detectives.

Both the shelving image 140A for store A and the shelving image 140B for store B show an electronic book titled Master Detective X, but include different recommendation data for that same electronic book. Specifically, the shelving image 140A includes the recommendation data 143 (text), "Unforgettable last chapter!," whereas the shelving image 140B includes recommendation data 147 (text), "Phenomenal Ending!" The present embodiment enables different stores to prepare different recommendation text and images for the same electronic book as recommendation data in this manner.

Each store can also determine how and where electronic books are arranged and displayed in a shelving image. For example, the electronic book titled Master Detective X, in the shelving image 140A for store A and the shelving image 140B for store B, is placed such that its front cover is visible. Meanwhile, in the shelving image 140C for store C, the same electronic book is placed such that its spine cover is visible. In addition, the electronic book titled Master Detective X, in the shelving image 140A for store A, is placed in the leftmost position on the lower shelf, whereas in the shelving image 140B for store B, the same electronic book is placed in the center position on the lower shelf.

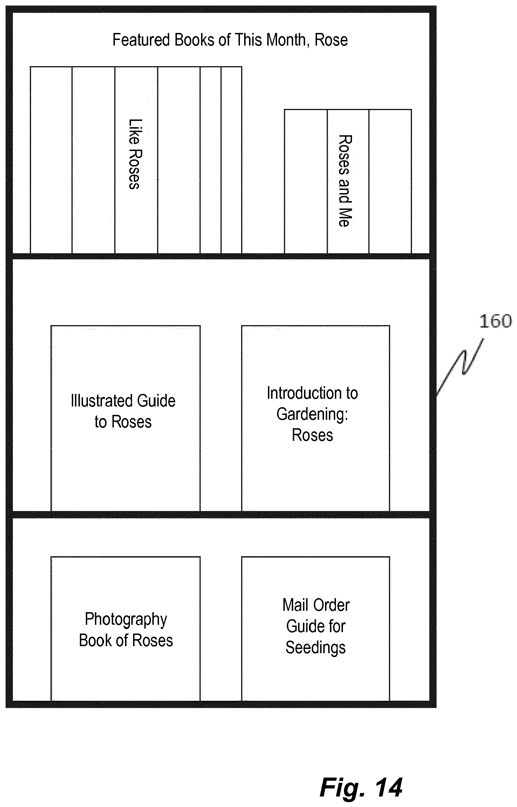

FIG. 14 shows another example of a shelving image generated on the basis of a set of rules of shelving that is unique to a store. A shelving image 160 in FIG. 14 shows text, "Featured Books of This Month, Rose," and a plurality of electronic books related to the rose. This shelving image 160 shows a plurality of electronic books being arranged on three book shelves: a top, a middle, and a bottom shelf. For example, rose-themed fictions are arranged on the top shelf. Meanwhile, on the middle and bottom shelves, non-fiction electronic books such as an illustrated guide and a photography book are shown.

Thus, a liberal design of display across various book categories becomes possible if electronic books are displayed under particular themes.

The digital content provision system 100 in accordance with the present embodiment includes the recommendation data storage unit 13. An additional embodiment is possible where the digital content provision system 100 does not include the recommendation data storage unit 13, in which case the store cannot display its unique recommendation data, but can still shelve electronic books in its unique manner.

The embodiments disclosed above are for illustrative purposes only and provide no basis for restrictive interpretations of the present invention. The embodiments may be modified for implementation, without departing from the scope of the present invention.

For example, the embodiments have been described by taking electronic books as an example of digital content to be provided. The digital content is however not necessarily electronic books. For example, music and video may be provided as digital content. When the digital content is music, for example, a shelving image may be generated showing a plurality of CDs being arranged and displayed on shelves. If the digital content is video, for example, a shelving image may be generated showing a plurality of DVDs and Blu-ray discs being arranged and displayed on shelves. In each of these alternative implementations, each store can prepare its unique recommendation data and generate and display a shelving image showing a plurality of digital content items such as CDs and DVDs being arranged on shelves together with recommendation data. In the third and sixth embodiments described above, the user is allowed to browse through electronic books in a prescribed area. The user may likewise be allowed to try CDs and preview video on DVDs and Blu-ray discs when the user is in a prescribed area. In this implementation, the user is allowed to try a song and preview a video by accessing a server containing music data and/or video data over the Internet from the information terminal 1. In this state, no music data or video data is downloaded to the information terminal 1. Therefore, no music or video data that is yet to be purchased will be illegally copied.

If a store that provides electronic books is a bookstore that provides paper books, the display device of the provision terminal 30 may show where paper versions of electronic books in the shelving image can be found in the bookstore. Additionally, if the paper versions are out of stock, the display device of the provision terminal 30 may indicate that they are and display a screen where the user can arrange a copy to be delivered by mail.

The embodiments and variation and alternative examples presented above may be combined in a suitable manner. As an example, the seventh embodiment may be combined with the third or sixth embodiment, where the digital content provision system enables each store to shelve electronic books in its unique manner and further enables users to browse through electronic books. As another example, the seventh embodiment may be combined with the second embodiment, where each store can prepare more than one type of unique shelving.

In the digital content provision systems described in the embodiments and variation and alternative examples, each block may be implemented as a separate LSI chip or like semiconductor device. Alternatively, some or all of the blocks may be integrated into a single chip.

Although the term, "LSI," is used here, the exact term may vary from IC to system LSI to super LSI to ultra LSI depending on integration levels.

Furthermore, the integrated circuit may be based on non-LSI technology such as purpose-built circuits or general-purpose processors. Alternatively, the integrated circuit may be based on the FPGA (field programmable gate array), which is programmable after being manufactured as an LSI, or the reconfigurable processor, which allows for reconfiguration of connections and settings of the internal circuit cells of the LSI.

If there emerges new, LSI-replacing integrated circuit technology as a direct result of progress of semiconductor technology or as a byproduct of other technology, the new technology may, needless to say, be used for further integration of functional circuit blocks. One of prospective candidates of such technology is applied biotechnology.

Some or all of the processes performed by the functional blocks in the embodiments may be implemented by programs. Some or all of the processes performed by the functional blocks in the embodiments are implemented, for example, by a central processing unit (CPU), microprocessor, or processor in a computer. The programs for implementing the processes are contained in a hard disk, ROM, or like storage device and executed either in a ROM or after being loaded into a RAM. The storage device (recording medium) may be a non-transient, tangible medium such as a tape, disc, card, semiconductor memory, or programmable logic circuitry.

Alternatively, the processes in accordance with the embodiments may be implemented by either hardware or software (which may or may not be used with an OS (operating systems), middleware, or prescribed libraries). Furthermore, the processes may be implemented by a combination of software and hardware. To implement a digital content provision system by hardware in accordance with any one of the embodiments above, it is of course necessary to adjust the timings at which the processes are implemented. For convenience of description, the embodiments omit detailed description of the adjustment of various signal timings that needs to be addressed in actual hardware designs.

### Reference Signs List

- 1: Information Terminal
- 10: Shelving Terminal
- 11: Shelving Image Generating Unit
- 12: Advertisement Data Storage Unit
- 13: Recommendation Data Storage Unit
- 15: User Information Acquisition Unit
- 20: Electronic Book Provision Server
- 21: Shelving Data Server
- 22: Advertisement Data Server
- 23: Provision Data Server
- 30: Provision Terminal

## Claims

1. A digital content provision system for providing digital content items in a store, the system comprising:
a recommendation data storage unit configured to store recommendation data for introducing or recommending the digital content items;
a shelving image generating unit configured to generate, based on the externally inputted recommendation data and externally inputted data related to the digital content items, a shelving image of a plurality of digital content items being arranged and displayed on a shelf and recommendation data being displayed for at least some of the digital content items; and
a display unit configured to display the shelving image generated by the shelving image generating unit,
wherein the digital content items can be provided in a plurality of stores, and the recommendation data is generated by each of the stores.

2. The digital content provision system according to claim 1, further comprising a shelving information input unit configured to enable an input of shelving information for the digital content items, wherein the shelving image generating unit generates the shelving image based on the shelving information.

3. The digital content provision system according to claim 1, wherein the shelving image generating unit generates the shelving image based on externally inputted shelving information.

4. The digital content provision system according to any one of claims 1 to 3, further comprising a local shelving data storage unit configured to store local shelving data generated by the stores, wherein the shelving image generating unit generates the shelving image based on the local shelving data.

5. The digital content provision system according to any one of claims 1 to 4, wherein:
the digital content items comprise an electronic book; and
the shelving image generating unit generates a shelving image of a plurality of electronic books being arranged on a shelf such that spine covers or front covers of the electronic books are visible.

6. The digital content provision system according to any one of claims 1 to 5, wherein:
the shelving image generating unit generates a plurality of shelving images; and
the display unit is capable of displaying the shelving images in a switchable manner.

7. The digital content provision system according to any one of claims 1 to 6, further comprising:
a location determining unit configured to determine whether or not a user is in a prescribed area; and
a preview control unit configured to allow the user to preview the digital content items if the user is determined to be in the prescribed area.

8. The digital content provision system according to any one of claims 1 to 7, further comprising a user information acquisition unit configured to acquire user information, wherein the shelving image generating unit acquires data related to the digital content items from the digital content storage unit in accordance with the user information acquired by the user information acquisition unit, in order to generate the shelving image.
